# EUROPEAN PATENT APPLICATION

(11) **EP 4 679 903 A1**
(43) Date of publication of application: **14.01.2026**
(21) Application number: 25187718.9
(22) Date of filing: 07.07.2025
(51) Int. Cl.: H04W 68/00, H04W 88/04, H04W 92/18

(54) **CONTROLLING PAGING THROUGH MULTI-HOP SIDELINK RELAY OPERATION**

(30) Priority: 08.07.2024 KR 20240089752; 11.06.2025 KR 20250076014
(71) Applicant: KT Corporation, Seongnam-si, Gyeonggi-do 13606 (KR)
(72) Inventor: HONG, Sung Pyo, Seongnam-si, Gyeonggi-do 13606 (KR)
(74) Representative: Santarelli

(57) **Abstract**

Provided are methods for controlling a paging operation using a wireless relay technology by relay UEs providing a multi-hop relay operation in a sidelink network. The method may include receiving, from a child relay UE, a message for paging reception of a remote UE, transferring the same to a parent relay UE, receiving a paging record from the parent relay UE, and transferring the same to the child relay UE.

## Description

### CROSS-REFERENCE TO RELATED APPLICATION

This application claims priority from Korean Patent Application Nos. 10-2024-0089752, filed on July 8, 2024, and 10-2025-0076014, filed on June 11, 2025, which are hereby incorporated by reference for all purposes as if fully set forth herein.

### BACKGROUND

### Field

The disclosure relates to a technology for controlling a paging operation using a wireless relay technology.

### Description of Related Art

The new radio (NR) sidelink relay operation is configured to support sidelink relay for various services, such as Vehicle to Everything (V2X), public safety, and commercial application.

However, the sidelink relay operation supported only a single hop sidelink relay operation. This single hop sidelink relay operation, where only one relay UE is present between a base station and a UE, may have limited applicability in applications due to the inherent characteristics of relay-based communication.

In environments where relay operation is practically necessary, such as when the coverage of a base station is exceeded, support for a multi-hop relay operation is required. Particularly, there is a need to support multi-hop relay operation using sidelink communication.

### BRIEF SUMMAR

The disclosure provides a paging control method and device for supporting multi-hop-based sidelink relay support.

In an aspect, the disclosure may provide a method for controlling paging by an intermediate relay UE providing a multi-hop relay operation in a sidelink network. The method may include receiving, from a child relay UE, a sidelink remote UE information message for receiving a paging message of a remote UE, transmitting the sidelink remote UE information message to a parent relay UE, receiving, from the parent relay UE, a sidelink RRC message including a paging record for the remote UE, and transmitting, to the child relay UE, the sidelink RRC message including the paging record.

In another aspect, the disclosure may provide a method for paging control of a last relay UE providing a multi-hop relay operation in a sidelink network. The method may include receiving, from an intermediate relay UE, a sidelink remote UE information message for receiving a paging message of a remote UE, receiving a paging message from a base station, identifying whether identification information of the remote UE included in the sidelink remote UE information message matches UE identification information of the paging message, and when the identification information of the remote UE matches the UE identification information of the paging message, including the paging record for the remote UE in the sidelink RRC message and transmitting to the intermediate relay UE.

In another aspect, the disclosure may provide an intermediate relay UE performing paging control through a multi-hop relay operation in a sidelink network. The intermediate relay UE may include a receiver receiving, from a child relay UE, a sidelink remote UE information message for receiving a paging message of a remote UE, and a transmitter transmitting the sidelink remote UE information message to a parent relay UE, wherein the receiver receives, from the parent relay UE, a sidelink RRC message including a paging record for the remote UE, and the transmitter transmits, to the child relay UE, the sidelink RRC message including the paging record.

In another aspect, the disclosure may provide a last relay UE performing paging control through a multi-hop relay operation in a sidelink network. The last relay UE may include a receiver receiving, from an intermediate relay UE, a sidelink remote UE information message for receiving a paging message of a remote UE and receiving a paging message from a base station, a controller identifying whether identification information of the remote UE included in the sidelink remote UE information message matches UE identification information of the paging message, and a transmitter, when the identification information of the remote UE matches the UE identification information of the paging message, including the paging record for the remote UE in the sidelink RRC message and transmitting to the intermediate relay UE.

According to the embodiments of the disclosure, a paging control method and device may be provided for supporting multi-hop-based sidelink relay support.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure.
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a view illustrating a configuration of a multi-hop relay according to an embodiment;
FIG. 9 is a view illustrating operations of an intermediate relay UE according to an embodiment;
FIG. 10 is a view illustrating operations of a last relay UE according to an embodiment;
FIG. 11 is a view illustrating a configuration of an intermediate relay UE according to an embodiment; and
FIG. 12 is a view illustrating a configuration of a last relay UE according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

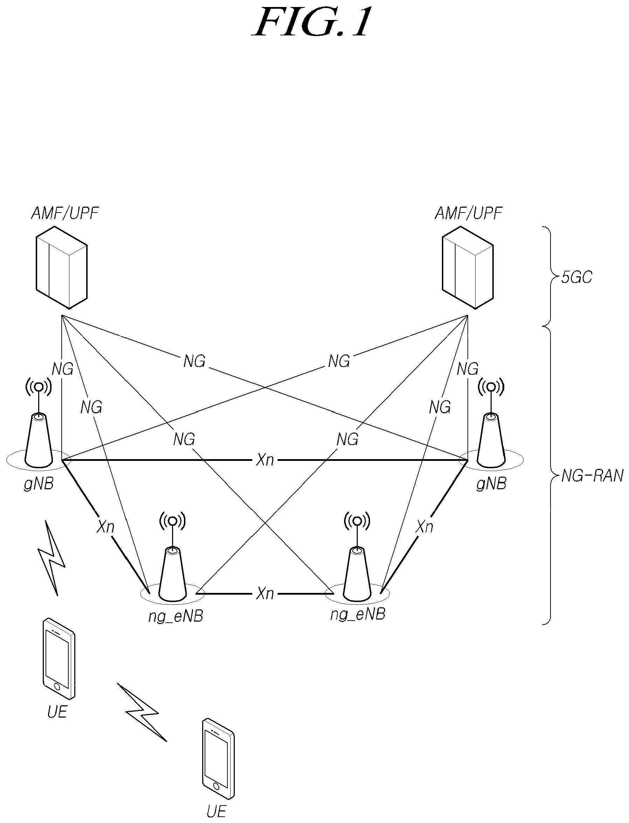

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

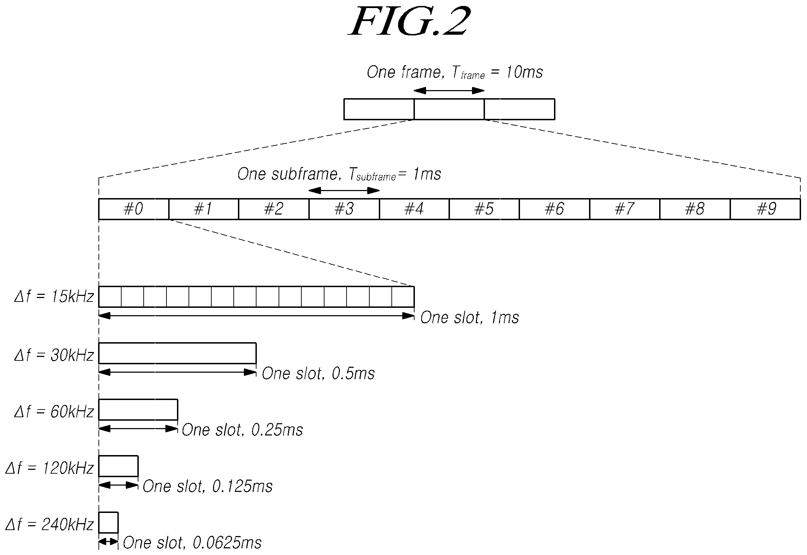

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system to which the present embodiment may be applied.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

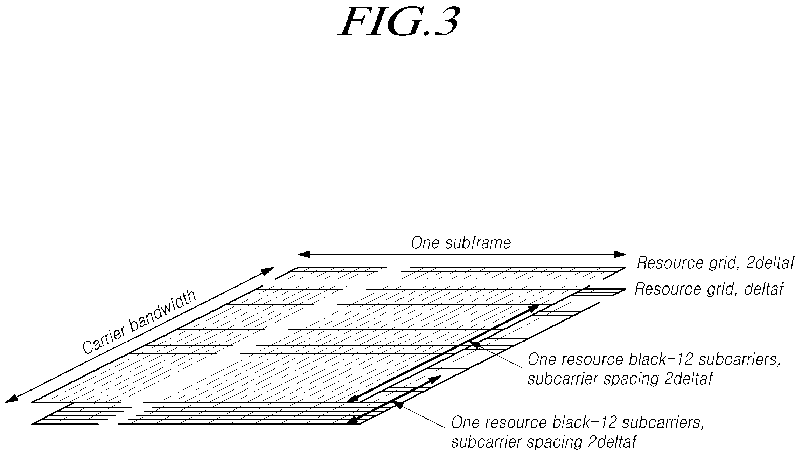

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

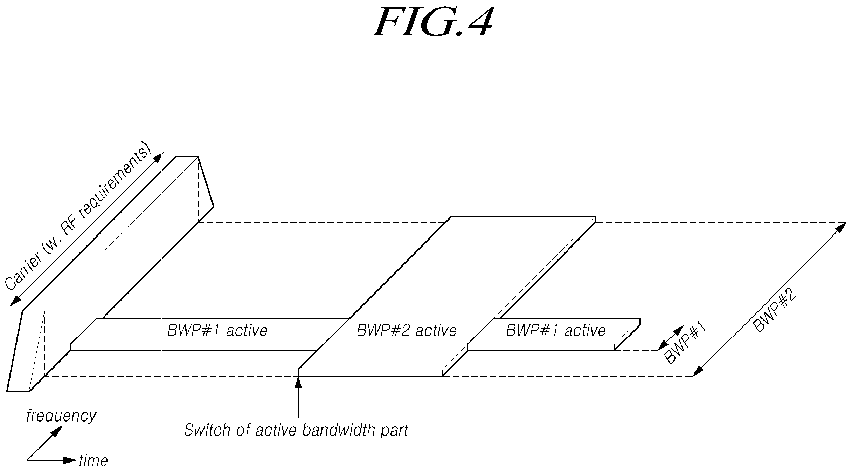

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

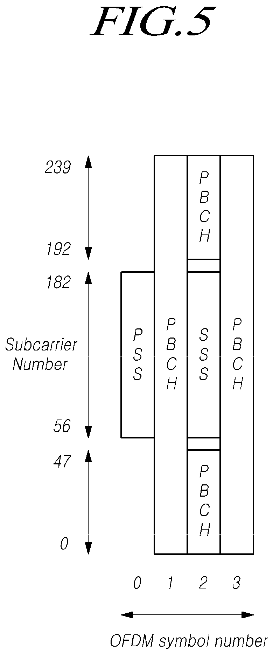

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB1), and the like. The SIB1 numerology information is also applied to some messages used in the random access procedure for the UE to access the base station after completing the cell search procedure. For example, the numerology information of SIB1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

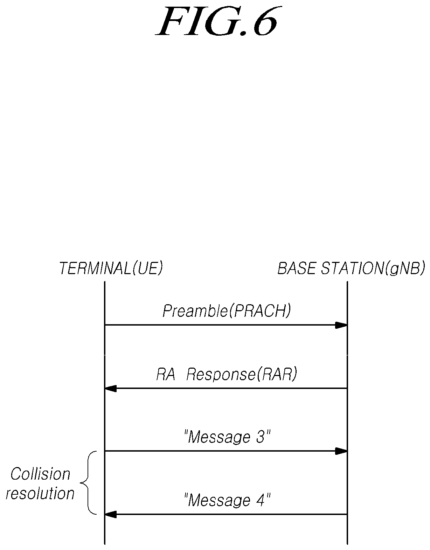

FIG. 6 is a view for explaining a random access procedure in a radio access technology to which the present embodiment is applicable.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

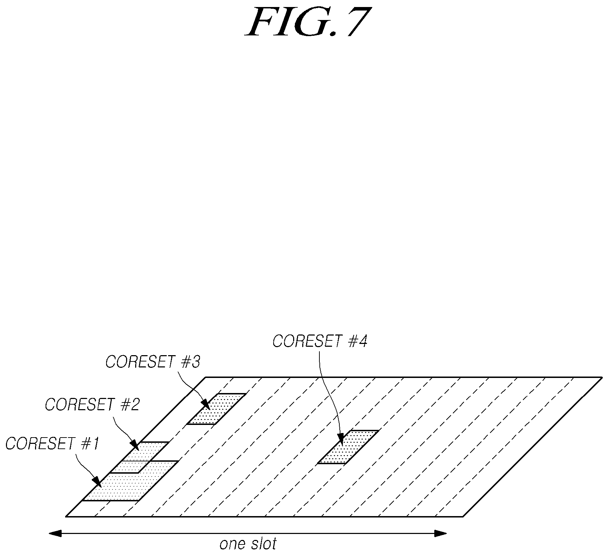

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as having meanings used in the past, present, or potentially in the future.

The disclosure relates to a paging control method and device for supporting multi-hop-based sidelink relay support.

In 3GPP, through standardization of NR sidelink relay items in Rel-17 and Rel-18, the relay function based on NR sidelink has been standardized. This made it possible to support sidelink relay in V2X, public safety, commercial application services, or the like. However, the conventional NR sidelink relay was limited to a single hop relay. Thus, its applicability in applications was limited. To address this, functionality to support multi-hop relay is needed, but corresponding standardization efforts have not yet been completed. Particularly, a specific method for paging for remote UEs in a multi-hop environment has not been provided.

Conceived to address the foregoing issues, the present embodiment proposes a relay provisioning method and device for transmitting/receiving data to/from a base station through an NR sidelink-based multi-hop relay UE. The present embodiments include a paging control method of the relay UE.

Hereinafter, a data processing method based on 5GS/NR technology is described. However, this is for convenience of description and the present embodiments may also be applied based on any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and associated operational procedure. Although the disclosure does not contain the content of the UE operation related to the definitions for the corresponding information elements, the content set forth in the standards may be incorporated in the disclosure.

Any function described below is defined as an individual-UE capability (UE radio capability or UE core network capability) and may be transmitted by the UE/device to the base station/core network entity (e.g. AMF/SMF) through corresponding signaling. Alternatively, one or more of the functions described may be combined/merged to be defined as the corresponding UE capability, and transmitted to the base station/core network entity through corresponding signaling by the UE.

The base station may transmit/indicate information for allowing/supporting/configuring the corresponding function/function combination for any function or any function combination, described below, to the UE through any downlink message (e.g., an RRC message, MAC control element, MAC PDU, or system information). For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The base station may transmit/indicate information for limiting/controlling any function described below, to the UE through any downlink message (e.g., an RRC message, MAC control element, or MAC PDU). For example, the prohibit timer of the corresponding function may be indicated. The corresponding prohibit timer may be start/restarted before or when the corresponding function is initiated. While the corresponding timer is running, the UE may limit/control the corresponding function not to he initiated/executed. For example, it may be indicated to the UE before or simultaneously with configuring/applying the corresponding function/function combination. The message may be broadcast in the corresponding area. The message may be transmitted (unicast) to a single UE in the corresponding area. The message may be transmitted (groupcast) to a group of UEs in the corresponding area.

The embodiments and corresponding functions described below may be performed individually and independently. The embodiments and related operations described below may be performed in combination with any embodiment and related operations, and it is obvious that they are also included in the scope of present embodiments. Any embodiment and related operations may be performed in any order.

Any information described below may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the average (expected value)/minimum/maximum/standard deviation values. This is for convenience of description, and all of the information in the disclosure may be used as statistical information. Any information described below may be information preconfigured in the UE/network or provisioned through OAM/application server/application function/UDM.

In NR technology, two UEs (i.e., remote UE and relay UE) are defined to support single hop sidelink relay. Here, the remote UE (U2N: UE-to-Network remote UE) is an UE that communicates with the network through a U2N relay UE. (a UE that communicates with the network via a U2N Relay UE.). The U2N relay UE is a device that provides functionality to support connectivity to a base station for a U2N remote UE. (a UE that provides functionality to support connectivity to the network for U2N Remote UE(s).) In order to indicate the UE capability (UE capability) for two UEs, a relay UE operation capability (relayUE-Operation-L2-r17) and the remote UE operation capability (remoteUE-Operation-L2-r17) have been defined.

A sidelink relay was supported only through a single hop sidelink relay UE. Therefore, an UE operating as a sidelink remote UE could not provide the sidelink relay UE function at a time/simultaneously. A sidelink relay UE provided a U2N relay discovery service to allow discovery by the remote UE, access to a 5G system as a single UE, and a unicast traffic relay function between the remote UE and a base station. A single-hop sidelink relay was provided through one sidelink relay (e.g., a U2N relay UE) between the remote UE and a base station. For convenience of description, hereinafter, an L2/L3 U2N remote UE (or End UE) that intends to connect to one or more sidelink relay-based networks is referred to as a remote UE.

A multi-hop sidelink relay should provide relaying through a plurality of sidelink-based relay UEs between the remote UE and a base station. Therefore, it may be difficult to provide multi-hop operation with only the sidelink relay UE (or its function) of the prior art. In order to support a multi-hop sidelink relay, a sidelink-based relay UE (or its function or functional entity) needs to be separately defined.

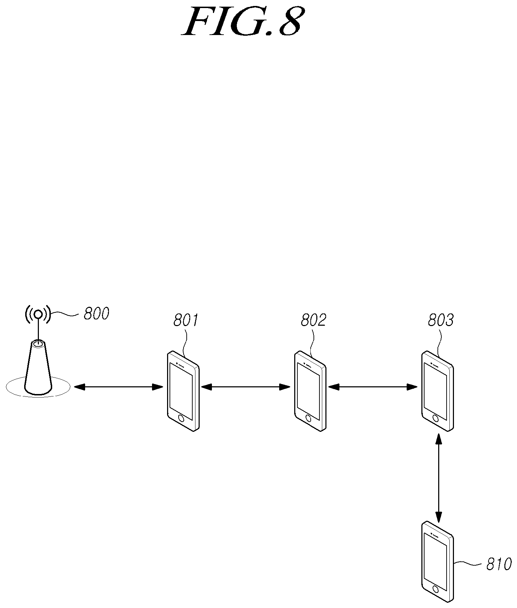

FIG. 8 is a view illustrating a multi-hop relay according to an embodiment.

Referring to FIG. 8, the multi-hop relay refers to a network where two or more relay UEs 801, 802, 803 transfer data over communication links between a base station 800 and the remote UE 810.

Among the two or more relay UEs, a relay UE 801 associated with the base station through a Uu interface may be described as a last relay UE. For example, a sidelink relay UE connected to the base station 800 through the Uu interface and connected to another sidelink relay UE through a PC5 interface is described as a last relay UE 801.

One or more sidelink relay UEs 802, 803 positioned between the last relay UE 801 and the remote UE 810 are described as intermediate relay UEs. Further, among the sidelink relay UEs, a relay UE that is first connected to the remote UE 810 is described as the first relay UE 803.

In other words, the last relay UE 801 refers to a relay UE connected to the base station. The intermediate relay UE refers to a relay UE positioned between the last relay UE 801 and the remote UE 810. Among the intermediate relay UEs, a UE that is first connected to the remote UE 810 may be more specifically described as the first relay UE.

For example, a sidelink relay UE may be divided into two relay UEs/functions. For example, a sidelink relay UE connected to the base station through a Uu interface and connected to another sidelink relay through the PC5 interface is referred to as the last relay UE for convenience of description. This is for convenience of description and may be replaced with any other name (e.g., PC5-Uu relay UE, L2 PC5-Uu U2N relay UE, terminal relay, top-level relay, parent relay, etc.). One or more sidelink relay UEs positioned between the last relay UE and the remote UE may be denoted as an intermediate relay UE (type 1) for convenience of description. This is for convenience of description and may be replaced with any other name.

As another example, it may be divided into three relay UE functions. For example, a sidelink relay UE connected to the base station through a Uu interface and connected to another sidelink relay through a PC5 interface (last relay UE), a sidelink relay UE directly connected to the remote UE through a PC5 interface (for convenience of description, referred to as the first relay UE). This is for convenience of description and may be replaced with any other name such as access relay, relay, lowest-level relay, child relay, etc.), and one or more sidelink relay UEs positioned between the last relay UE and the first relay UE (for convenience of description, referred to as intermediate relay UE (type 2), which may be replaced with any other name) may be separately defined.

The last relay UE may be connected to the base station through a Uu interface and also connected to another sidelink relay UE through a PC5 interface. The last relay UE may provide connectivity to a network (e.g., a base station) for remote UEs directly/indirectly connected to the last relay UE. Here, a direct connection between the last relay UE and the remote UE indicates that the remote UE is directly connected to the relay UE through a PC5 interface.

For example, it indicates a connection from the remote UE to the last relay UE. An indirect connection between the last relay UE and the remote UE indicates that the remote UE is connected to the relay UE through one or more sidelink relay UEs. For example, it indicates a connection such as remote UE-intermediate relay UE-last relay UE, remote UE-first relay UE-intermediate relay UE-last relay UE, etc. The last relay UE may initiate/trigger/perform the operation(s) when positioned in the base station coverage to provide connectivity to the base station for remote UEs directly/indirectly connected to the last relay UE. For example, in the case where the last relay UE moves out of coverage, Uu RLF, RRC connection failure, etc., the last relay may be instructed to direct the relevant information to directly/indirectly connected remote UEs and/or intermediate relay UEs and/or first relay UE.

An intermediate relay UE (type 1) or an intermediate relay UE (type 2) only differs in whether the sidelink relay UE is divided into two types or three types, but it may be directly/indirectly connected to the last relay UE to provide connectivity to a network (e.g., a base station) for remote UEs directly/indirectly connected to the intermediate relay UE (through the last relay). Hereinafter, for convenience of description, the intermediate relay UE (type 1) or the intermediate relay UE (type 2) is referred to as an intermediate relay UE. The intermediate relay UE may be configured to operate as an intermediate relay UE (type 1). For instance, the first relay UE may also serve as an intermediate relay UE. The corresponding UE type information may be set to the same value.

The intermediate relay UE may be configured to operate as an intermediate relay UE (type 2). For example, the intermediate relay UE may be a relay UE distinguished from the first relay UE. The corresponding UE type information may be set to a different value.

The first relay UE may be (directly) connected to the remote UE through a PC5 interface and connected to one of the intermediate relay UE, the last relay UE, or the base station. For example, based on SL-RSRP/SD-RSRP measurements for the relay UE or RSRP measurements for the base station cell, the relay UE or the cell may be selected for connection. When the first relay UE is directly connected to the base station, it may provide the last relay UE function.

The last relay UE may connect with remote UE(s) in its sidelink coverage. For example, it may connect as remote UE-last relay UE-base station. In such a case, the last relay UE may operate similarly to a single-hop relay UE of the prior art. The intermediate relay UE may connect with remote UE(s) in its sidelink coverage. For example, it may connect as remote UE-intermediate relay UE-last relay UE-base station. Thus, assuming that all types of sidelink relay UEs are directly connected to remote UEs, the last relay UE and the intermediate relay UE may provide a first remote UE function (e.g., first hop remote UE connection). In such cases, the sidelink relay UE may be processed by distinguishing between two relay UEs/functions (i.e., the last relay UE and the intermediate relay UE).

One sidelink relay UE may be configured to support only one UE function at a time, either the intermediate relay UE function or the last relay UE function. One sidelink relay UE may be configured not to provide both the intermediate relay UE function and the last relay UE function simultaneously. For example, when the intermediate relay UE detects a PC5-RLF on the PC5 interface with a previous last relay UE, the intermediate relay UE may connect to the base station through cell reselection (after releasing the PC5 connection with the previous last relay UE). In such a case, the intermediate relay UE may be configured to operate as the last relay UE. The base station may indicate the corresponding configuration to allow the intermediate relay UE to operate as the last relay UE.

Meanwhile, it may also be configured to provide the sidelink relay UE function to the UE operating as a remote UE according to the multi-hop sidelink support, at a time/simultaneously. For example, if the remote UE is a UE capable of intermediate relay UE function (e.g., intermediated relay capable UE), the remote UE may perform any intermediate relay UE operation (described in the disclosure). For example, the data/traffic of the remote UE may be transmitted to the base station through one or more sidelink relay UEs. The remote UE operates as a sidelink relay UE and may transmit its own data/traffic and that of another remote UE connected to it to the base station through one or more sidelink relay UEs.

For convenience of description, the following description is based on a three-hop relay connection of "remote UE-first relay UE-intermediate relay UE-last relay UE-base station." As described above, the first relay UE may serve as the intermediate relay UE. In such a case, the three-hop relay connection may be connected as "remote UE-first intermediate relay UE-second intermediate relay UE-last relay UE-base station." While the description is based on "remote UE-first relay UE-intermediate relay UE-last relay UE-base station" for convenience, it is evident that processing based on relay UE roles (e.g., last relay UE and intermediate relay UE) as "remote UE-first intermediate relay UE-second intermediate relay UE-last relay UE-base station" is also in the scope of the disclosure.

Meanwhile, for convenience of description, the relay node closer to the remote UE among two sidelink relay nodes connected through the PC5 interface is referred to as a lower relay UE, and the relay node closer to the base station is referred to as an upper relay UE. This is also for convenience of description, and a lower relay UE may be replaced with any other name, such as a downlink relay UE or a child relay UE. Similarly, an upper relay UE may be replaced with any other name, such as an uplink relay UE or a parent relay UE.

For example, out of two relay UEs connected through the PC5 interface, the relay UE with fewer hops for connection to the base station (or more hops for connection to the remote UE) becomes the upper relay UE. The relay UE with more hops for connection to the base station (or fewer hops for connection to the remote UE) becomes the lower relay UE.

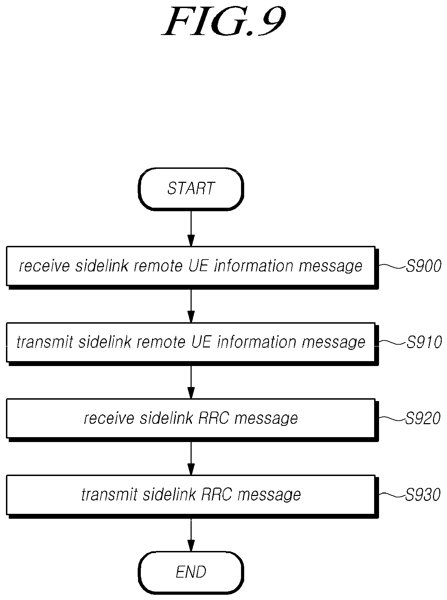

FIG. 9 is a flowchart illustrating operations of an intermediate relay UE according to an embodiment.

Referring to FIG. 9, a paging control method of the intermediate relay UE providing a multi-hop relay operation in a sidelink network may include a step S900 of receiving a sidelink remote UE information message for receiving a paging message of a remote UE from a child relay UE.

For example, the intermediate relay UE may be configured to perform relay UE operations and remote UE operations simultaneously. The intermediate relay UE may include a relay UE function for relaying data between the remote UE and the parent UE. Further, the intermediate relay UE may include the remote UE function for operating as the remote UE.

The intermediate relay UE may operate as the remote UE to transfer or receive data to/from a higher relay UE. Further, the intermediate relay UE may operate as a relay UE to transfer or receive data to/from a lower relay UE or the remote UE.

The intermediate relay UE may receive a sidelink remote UE information message from the child relay UE, which is a lower relay UE. The sidelink remote UE information message is a sidelink RRC message.

The sidelink remote UE information message may include information for receiving the paging message of the remote UE. For example, the sidelink remote UE information message may include at least one of identification information of the remote UE and UE-specific DRX cycle information. Accordingly, the last relay UE may receive the paging message of the remote UE and transfer it to the remote UE through a relay operation. Here, the identification information of the remote UE may be one of a 5G-S-TMSI and an I-RNTI. For example, when the remote UE is in an RRC IDLE state, the identification information of the remote UE may include a 5G-S-TMSI. As another example, when the remote UE is in an RRC INACTIVE state, the identification information of the remote UE may include an I-RNTI.

The child relay UE may be a UE positioned under the intermediate relay UE and may be another intermediate relay UE, the first relay UE, or the remote UE.

The sidelink remote UE information message includes information for receiving the paging message of the remote UE through a multi-hop relay operation and is transferred to the last relay UE through each relay UE.

The paging control method of the intermediate relay UE may include a step (S910) of transmitting a sidelink remote UE information message to the parent relay UE.

The intermediate relay UE may transfer the sidelink UE information message received from the child relay UE to a higher parent relay UE. For example, the sidelink UE information message may be transferred through a PC5 interface between relay UEs as a sidelink RRC message.

The parent relay UE is a relay UE positioned above the intermediate relay UE and may be another intermediate relay UE or the last relay UE.

For example, when the UE identification information of the remote UE included in the sidelink remote UE information message matches the UE identification information of the paging message received from the base station, the parent relay UE may include the paging record for the remote UE in the sidelink RRC message and transmit it to the intermediate relay UE. The parent relay UE performing this operation is the last relay UE.

The parent relay UE (last relay UE) receives information related to the transfer of the paging message for the remote UE that needs to receive the paging message. If the paging message is received from the base station, the parent relay UE identifies whether the identification information of the remote UE matches the UE identification information included in the paging message. If the identification information of the remote UE matches the UE identification information of the paging message, it is identified that the paging message is for the remote UE.

Therefore, the parent relay UE may include the paging record for the remote UE (e.g., the paging message of the remote UE) in the sidelink RRC message and transmit it to the intermediate relay UE.

The paging control method of the intermediate relay UE may include a step (S920) of receiving the sidelink RRC message including the paging record for the remote UE from the parent relay UE.

The intermediate relay UE receives the sidelink RRC message transferred by the parent relay UE. The sidelink RRC message may include the paging record for the remote UE.

The paging control method of the intermediate relay UE may include a step (S930) of transmitting the sidelink RRC message including the paging record to the child relay UE.

The intermediate relay UE may transfer the received sidelink RRC message to the child relay UE. For this purpose, the sidelink RRC message may include L2 destination ID information or the like.

Meanwhile, the base station may broadcast whether the base station supports the multi-hop relay operation or the multi-hop relay operation through the sidelink. In the case of a sidelink multi-hop relay operation, the last relay UE receives the paging message and transfers it to the remote UE through a multi-hop relay. Further, even in circumstances outside the cell coverage of the base station, a data communication function may be supported through a multi-hop relay.

To this end, the base station may transmit indication information indicating support for a UE performing the multi-hop relay operation in a sidelink network through a downlink signal. By identifying this, the UE supporting the sidelink multi-hop relay operation may recognize that the corresponding base station supports the corresponding function. For example, the indication information may be transmitted through system information. For example, the indication information may be included in SIB12.

Through the operation, the remote UE may receive the paging message through a multi-hop relay. To this end, the intermediate relay UE may transfer the sidelink remote UE information message, transferred from the remote UE, to the last relay UE. The last relay UE may receive the paging message for the remote UE from the base station using the information included in the sidelink remote UE information message. The last relay UE identifies whether the received paging message is intended for the remote UE through identification information comparison. The last relay UE transfers the sidelink RRC message including the paging record to the remote UE through relay UEs. Accordingly, the remote UE may smoothly receive the paging message even in a multi-hop environment.

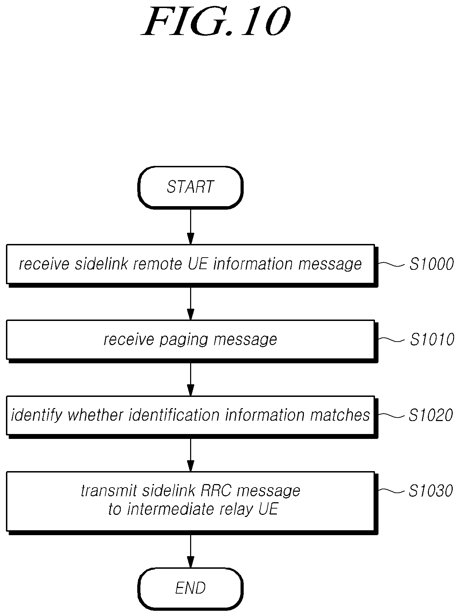

FIG. 10 is a flowchart illustrating operations of a last relay UE according to an embodiment.

Referring to FIG. 10, a paging control method of the last relay UE providing a multi-hop relay operation in a sidelink network may include a step (S1000) of receiving a sidelink remote UE information message for receiving a paging message of the remote UE from the intermediate relay UE.

As described above, the last relay UE refers to a relay UE connected to the base station through a Uu interface. The last relay UE is the first relay UE connected to the base station.

For example, the last relay UE receives the sidelink remote UE information message, configured for the remote UE to receive the paging message through a sidelink multi-hop relay operation, through the intermediate relay UE. The intermediate relay UE, as described above, refers to a relay UE configured between the last relay UE and the remote UE. The intermediate relay UE may be configured to perform both relay UE operation and remote UE operation simultaneously. The intermediate relay UE may include a relay UE function for relaying data between the remote UE and the parent UE. Further, the intermediate relay UE may include the remote UE function for operating as the remote UE.

The last relay UE is the parent relay UE from the perspective of the intermediate relay UE, and the intermediate relay UE is the child relay UE from the perspective of the last relay UE.

The sidelink remote UE information message is the sidelink RRC message.

The sidelink remote UE information message may include information for receiving paging of the remote UE. For example, the sidelink remote UE information message may include at least one of identification information of the remote UE and UE-specific DRX cycle information. Here, the identification information of the remote UE may be either 5G-S-TMSI or I-RNTI. For example, when the remote UE is in an RRC IDLE state, the identification information of the remote UE may include 5G-S-TMSI. As another example, when the remote UE is in an RRC INACTIVE state, the identification information of the remote UE may include I-RNTI.

If the sidelink remote UE information message is received, the last relay UE may perform a paging monitoring operation for the remote UE using it.

The paging control method of the last relay UE may include a step (S1010) of receiving the paging message from the base station.

For example, the last relay UE monitors and receives the paging message transmitted by the base station. When the last relay UE is functioning as the last relay UE for a plurality of remote UEs, it may receive paging messages for the plurality of remote UEs, that have received sidelink remote UE information messages, from the base station.

For example, the last relay UE may monitor the paging message transmitted by the base station for the remote UE using DRX cycle information, identification information, and paging occasion information of the remote UE.

The paging control method of the last relay UE may include a step (S1020) of identifying whether the identification information of the remote UE included in the sidelink remote UE information message matches the UE identification information of the paging message.

The last relay UE may identify whether the monitored and received paging message is intended for the corresponding remote UE. To this end, the last relay UE may use the sidelink remote UE information message received by the child relay UE (e.g., the intermediate relay UE).

As one example, the last relay UE may identify whether the UE identification information of the received paging message matches the identification information of the remote UE included in the sidelink remote UE information message. As described above, the last relay UE is to receive the paging message of the remote UE, and when UE identification information and remote UE identification information match, it may be identified that the paging message is for the remote UE.

If the UE identification information of the paging message and the remote UE identification information do not match, the last relay UE determines that the paging message is not for the remote UE.

The paging control method of the last relay UE may include a step (S1030) of, when the identification information of the remote UE matches the UE identification information of the paging message, including the paging record for the remote UE in the sidelink RRC message and transmitting it to the intermediate relay UE.

For example, if the identification information of the remote UE matches the UE identification information of the paging message, the paging message should be transferred to the remote UE. To this end, the last relay UE includes the paging record for the remote UE in the sidelink RRC message and transmits it to the remote UE.

The last relay UE may include the paging record, as a container, in the sidelink RRC message and transmit it to the intermediate relay UE, which is the child relay UE. If the intermediate relay UE receives the sidelink RRC message including the paging record for the remote UE from the parent relay UE (e.g., the last relay UE), it may transfer it to the child relay UE. When the intermediate relay UE is the first relay UE, the sidelink RRC message may be transferred to the remote UE.

For such a transfer procedure, the sidelink RRC message may include, e.g., L2 destination ID information.

Meanwhile, the base station may broadcast whether the base station supports multi-hop relay operation or multi-hop relay operation through sidelink. In the case of sidelink multi-hop relay operation, the last relay UE receives the paging message and transfers it to the remote UE through the multi-hop relay. Further, even when falling outside the coverage of the base station cell, data communication functionality may be supported through the multi-hop relay.

To this end, the base station may transmit indication information indicating support for UEs performing multi-hop relay operation in the sidelink network through a downlink signal. By identifying this, an UE supporting sidelink multi-hop relay operation may recognize that the base station supports the function. For example, the indication information may be transmitted through system information. For example, the indication information may be included in SIB12.

Through the operation, the remote UE may receive the paging message through the multi-hop relay. To this end, the intermediate relay UE may transfer the sidelink remote UE information message received from the remote UE to the last relay UE. The last relay UE may receive the paging message of the remote UE from the base station using the information included in the sidelink remote UE information message. The last relay UE identifies whether the received paging message is for the remote UE through identification information comparison. The last relay UE transfers the sidelink RRC message including the paging record to the remote UE through the relay UEs. Accordingly, the remote UE may smoothly receive the paging message even in a multi-hop environment.

Below, the paging processing embodiment for the above-described remote UE is described in more detail and variously. The embodiments described below may be combined in any combination to constitute an embodiment of the disclosure.

### Paging method for remote UE

In typical sidelink relay technology, when the L2 relay UE and L2 remote UE are in an RRC IDLE/INACTIVE state, paging could be received through the L2 relay UE. The L2 relay UE could receive the paging message for the L2 remote UE by monitoring the paging occasion of the connected L2 remote UE(s). In a multi-hop environment, it is necessary to receive paging for the remote UE in the RRC IDLE/INACTIVE state. However, a specific method for the paging method of the remote UE has not been provided.

Paging for the remote UE may be provided using the following method.

For example, when the last relay UE and the remote UE directly/indirectly connected to the last relay UE are in the RRC IDLE/INACTIVE state, the last relay UE may be configured to monitor paging (or paging occasion) for the remote UE.

To request the last relay UE to perform paging occasion monitoring for the remote UE, the remote UE in the RRC IDLE state may provide the last relay UE with the remote UE identifier (e.g., 5G-S-TMSI) and (if configured) UE-specific DRX cycle information. The remote UE in the RRC INACTIVE state may provide the remote UE identifier (e.g., I-RNTI) and (if configured respectively by the core network and the base station) the minimum value of two UE-specific DRX cycles to the last relay UE. The remote UE may indicate, to the last relay UE, whether to monitor the paging occasion for the remote UE including the remote UE identifier (e.g., 5G-S-TMSI and/or I-RNTI) and paging cycle information.

As another example, when the last relay UE is in the RRC connected state and the remote UE directly/indirectly connected to the last relay UE is in the RRC IDLE/INACTIVE state, two methods may be provided for paging.

For example, when the last relay UE is in an RRC connected state and the remote UE directly/indirectly connected to the last relay UE is in the RRC IDLE/INACTIVE state, the base station may deliver paging of the remote UE through a dedicated RRC message to the last relay UE. For example, it may be transmitted through an RRC reconfiguration message including the paging message. The message may include remote UE identifier information (e.g., 5G-S-TMSI or I-RNTI).

Upon receiving the paging message, the last relay UE may identify the remote UE identifier information (e.g., 5G-S-TMSI or I-RNTI). If the identifier information matches, the related paging record information may be transmitted to the remote UE. The last relay UE may transmit the paging to the intermediate relay UE using unicast signaling through the PC5 interface. The intermediate relay UE may transmit the paging to the first relay UE using unicast signaling through the PC5 interface. The first relay UE may transmit the paging to the remote UE using unicast signaling through the PC5 interface.

As another example, when the last relay UE is in the RRC connected state and the remote UE directly/indirectly connected to the last relay UE is in the RRC IDLE/INACTIVE state, the last relay UE may monitor a paging occasion for the remote UE. For example, if the active downlink BWP of the last relay UE is configured with a common search space including a paging search space, the paging occasion of the remote UE directly/indirectly connected to the last relay UE may be monitored.

To request the last relay UE to perform paging occasion monitoring for the remote UE, the remote UE in the RRC IDLE state may provide the last relay UE with the remote UE identifier (e.g., 5G-S-TMSI) and (if configured) UE-specific DRX cycle information. The remote UE in the RRC INACTIVE state may provide the remote UE identifier (e.g., I-RNTI) and (if configured respectively by the core network and the base station) the minimum value of two UE-specific DRX cycles to the last relay UE. The remote UE may indicate, to the last relay UE, whether to monitor the paging occasion for the remote UE including the remote UE identifier (e.g., 5G-S-TMSI and/or I-RNTI) and paging cycle information.

### Method for indicating paging monitoring of remote UE

As described above, the remote UE in the RRC IDLE/INACTIVE state needs to indicate paging monitoring for the remote UE to the last relay UE. For example, it may indicate whether to monitor the paging occasion for the remote UE including the remote UE identifier (e.g., 5G-S-TMSI and/or I-RNTI) and paging cycle information. The remote UE may use the following method to indicate the information to the last relay UE via a multi-hop-based sidelink relay.

For example, the remote UE may transmit paging-related information to the last relay UE through the base station. The remote UE may transmit the indication information to the base station through an end-to-end Uu signaling radio bearer. For example, the information may be included in the sidelink UE information message (e.g., SidelinkUEInformationNR message) and be transmitted to the base station. Alternatively, it may be indicated to the base station through a new end-to-end Uu RRC message distinct from the sidelink UE information message (e.g., SidelinkUEInformationNR message). For example, the remote UE may indicate the information to the base station in one or more of the following cases: before the remote UE transitions to the RRC connected state, transitions to the RRC INACTIVE/IDLE state, changes its paging reception preference, changes its cell, selects/reselects a relay, experiences sidelink RLF, prior to PC5-RRC connection release, upon the higher layer's request for PC5-RRC connection release, or changes in path/relay UE-set information. The information may include one or more of the remote UE identifier (e.g., 5G-S-TMSI and/or I-RNTI), the (above-described) paging cycle information, path/relay set information for data transmission to the remote UE by the last relay UE (based on the L2 destination ID), the remote UE L2 destination ID information, paging reception (preference/request/configuration) indication information through the last relay UE, and information indicating whether the indication information is transmitted to the last relay.

The base station may indicate paging-related information of the remote UE to the last relay UE through a downlink RRC message (e.g., RRC reconfiguration/setup/resume/release). The information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, and paging reception (preference/request/configuration) indication information through the last relay UE. The path/relay UE-set information may include set/collection information of sidelink relay UEs included on the path from the remote UE (or the first/intermediate relay UE) to the base station. For example, when the remote UE is connected to the base station through the path of "remote UE-first relay UE-intermediate relay UE-last relay UE-base station," the path/relay UE-set information may be provided to include first relay UE identifier information, intermediate relay UE identifier information, and last relay UE identifier information. The relay UE identification information may be one or more of the L2 destination ID, the L2 source ID, and the C-RNTI of the sidelink relay UE.

The base station may indicate paging-related information of the remote UE to the last relay UE through a downlink RRC message (e.g., RRC reconfiguration/setup/resume/release). Upon receiving a downlink RRC message including paging-related information of the remote UE, the last relay UE may be configured to monitor the paging message at the paging occasion of the remote UE. For example, the last relay UE may be configured to monitor the paging message at the paging occasion of the remote UE calculated based on the received information if the UE is in the RRC connected state on the active BWP having a common search space including paging search space, and/or the UE is in a RRC idle state, and/or the UE is in the RRC inactive state. The downlink RRC message may include paging-related information of the remote UE.

The information may include one or more of the remote UE identifier (e.g., 5G-S-TMSI and/or I-RNTI), the (above-described) paging cycle information, path/relay set information for data transmission to the remote UE by the last relay UE (based on the L2 destination ID), the remote UE L2 destination ID information, and paging reception request/configuration/indication information through the last relay UE.

The base station may indicate paging-related information to the remote UE through a downlink RRC message (e.g., RRC reconfiguration/setup/resume/release). Through this, the remote UE may be notified of the paging reception request/configuration/indication state through the last relay UE. The information may include one or more of the remote UE identifier (e.g., 5G-S-TMSI and/or I-RNTI), the (above-described) paging cycle information, path/relay set information for data transmission to the remote UE by the last relay UE (based on the L2 destination ID), the remote UE L2 destination ID information, the relay UE L2 destination ID information, and paging reception request/configuration/indication information through the last relay UE.

Upon receiving the downlink RRC message, the remote UE may refrain from sending a message (e.g., RemoteUEInformationSidelink) to the last relay UE indicating whether to perform paging occasion monitoring for the remote UE, which includes the remote UE identifier (e.g., 5G-S-TMSI and/or I-RNTI) and paging cycle information. For example, only when the downlink RRC message is not received, the remote UE may send a message (e.g., RemoteUEInformationSidelink) to any sidelink relay UE for indicating whether to perform paging occasion monitoring for the remote UE, which includes the remote UE identifier (e.g., 5G-S-TMSI and/or I-RNTI) and paging cycle information.

As another example, the remote UE may perform a sidelink RRC procedure for each PC5 link on the path to the last relay UE to transmit information to the last relay UE for indicating the monitoring of paging occasions for the remote UE (via unicasting). The information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, paging reception request/configuration/ indication information through the last relay UE, and information indicating whether the indication information is transmitted to the last relay.

The remote UE may transmit the sidelink RRC message including the information to the first relay UE. The sidelink RRC message may include information necessary to transmit the information to the last relay UE. For example, the information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, and paging reception request/configuration/indication information through the last relay UE. The sidelink RRC message may use the sidelink remote UE information message (e.g., RemoteUEInformationSidelink). Alternatively, the sidelink RRC message distinct from the sidelink remote UE information message may be defined and used. Until the final destination L2 destination ID of the indication information is reached on the uplink, the sidelink relay may transmit the message through the uplink/higher link. In the sidelink discovery and/or sidelink relay configuration process by the base station, whether it is a uplink/higher link may be explicitly or implicitly configured/indicated/identified by the number of hops or the like.

The first relay UE that received the message may transmit the sidelink RRC message including the information to the intermediate relay UE. For example, the first relay UE that received the sidelink RRC message may use the information to transmit the information to the intermediate relay UE if the sidelink RRC message included the information necessary to transmit the information to the last relay UE. As another example, (if the UE is not an L2 U2N relay UE according to the prior art, and) if the UE is not the last relay UE (or if the UE is the first relay UE or if the UE is an intermediate relay UE), the first relay UE that received the sidelink RRC message may transmit it to the last relay UE (or next hop to the last relay UE).

The sidelink RRC message may use the sidelink remote UE information message (e.g., RemoteUEInformationSidelink). Alternatively, the sidelink RRC message that is different from the sidelink remote UE information message (e.g., RemoteUEInformationTransferSidelink) may be defined and used.

The intermediate relay UE that received the message may transmit the sidelink RRC message including the information to the last relay UE. For example, the intermediate relay UE that received the sidelink RRC message may use the information to transmit the information to the last relay UE if the sidelink RRC message included the information necessary to transmit the information to the last relay UE. As another example, (if the UE is not an L2 U2N relay UE according to the prior art, and) if the UE is not the last relay UE, the intermediate relay UE that received the sidelink RRC message may transmit it to the last relay UE (or next hop to the last relay UE).

The sidelink RRC message may use the sidelink remote UE information message (e.g., RemoteUEInformationSidelink). Alternatively, the sidelink RRC message that is distinct from the sidelink remote UE information message (e.g., RemoteUEInformationTransferSidelink) may be defined and used.

As another example, if the remote UE performs a sidelink RRC procedure to the first relay UE to transmit information for indicating the paging occasion monitoring of the remote UE (if the UE that received the information is the first relay UE), the first relay UE may transmit it to the last relay UE.

The remote UE may transmit the sidelink RRC message including the indication information to the first relay UE. The sidelink RRC message may include information necessary to transmit the indication information to the last relay UE. For example, the information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, paging reception request/configuration/ indication information through the last relay UE, and information indicating whether the indication information is transmitted to the last relay.

As another example, if the remote UE performs a sidelink RRC procedure to the first relay UE to transmit information for indicating the paging occasion monitoring of the remote UE (if the UE that received the information is the first relay UE), the first relay UE may transmit it to the base station. The base station may transmit the information for indicating the paging occasion monitoring the remote UE to the last relay UE.

The remote UE may transmit the sidelink RRC message including the indication information to the first relay UE. The sidelink RRC message may include information necessary to transmit the indication information to the last relay UE. For example, the information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, paging reception request/configuration/ indication information through the last relay UE, and information indicating whether the indication information is transmitted to the last relay. The first relay UE may transmit the received information to the base station. For example, the information may be included in the sidelink UE information message (e.g., SidelinkUEInformationNR message) and be transmitted to the base station. Alternatively, it may be indicated to the base station through a new end-to-end Uu RRC message distinct from the sidelink UE information message (e.g., SidelinkUEInformationNR message).

As another example, the remote UE may transmit the indication information to the last relay UE through an end-to-end PC5-RRC connection between the remote UE and the last relay UE through the sidelink RRC message (end-to-end between the remote UE and the last relay UE).

The remote UE may transmit an end-to-end sidelink RRC message, which includes the indication information, to the first relay UE. For example, the end-to-end sidelink RRC message may be included in the sidelink RRC message between the remote UE and the first relay UE and may be transmitted. The sidelink RRC message between the remote UE and the first relay UE may include information for indicating whether the end-to-end sidelink RRC message is included and/or information necessary for transmitting the indication information to the last relay UE. A PDCP/SDAP configuration for transmitting the end-to-end sidelink RRC message may be configured to the remote UE and the last relay UE by the base station or by pre-configuration. The sidelink RRC message between the remote UE and the first relay UE may include identification information (L2 destination ID) of the last relay UE to which the indication information is to be transmitted. Alternatively, path/relay set information between the remote UE and the last relay UE (e.g., identification information of the first relay UE (L2 destination ID), identification information of the last relay UE (L2 destination ID)) may be included. Alternatively, information for indicating whether the indication information is to be transmitted to the last relay may be included. Alternatively, the L2 destination ID that serves as the final destination of the indication information on the uplink may be included. The sidelink RRC message information may include one or more of the remote UE identifier (e.g., 5G-S-TMSI and/or I-RNTI), the (above-described) paging cycle information, path/relay UE-set information for data transmission to the remote UE by the last relay UE (based on the L2 destination ID), the remote UE L2 destination ID information, paging reception request/configuration/ indication information through the last relay UE, and information indicating whether the indication information is transmitted to the last relay.

As another example, the end-to-end sidelink RRC message may be transmitted between the remote UE and the last relay UE through U2U sidelink relaying by the first relay UE.

If the last relay UE receives information indicating paging occasion monitoring for the remote UE through the above-described embodiments, the last relay UE may operate as follows.

If the message includes paging information for the remote UE, and if the UE is in the RRC connected state on the active BWP having a common search space including a paging search space, or in the RRC idle/inactive state, if paging information is set up for the remote UE, it may monitor the paging message in a paging occasion of the remote UE calculated by the identifier of the remote UE and the paging cycle.

When the last relay UE is in the RRC connected state, the last relay UE may notify the base station of the remote UE information through the sidelink UE information message for paging delivery purposes.

The remote UE that received the Uu message, upon receiving the paging-related information, may perform a paging reception procedure. Further, the remote UE that received system information-related information, upon receiving system information-related information, may perform a paging reception procedure. It may perform a system information reception operation.

Embodiments of processing the paging message of the remote UE through sidelink multi-hop relay operation have been described above. Embodiments of signaling message transfer operation in sidelink multi-hop relay operation are described below.

Any combination of the operations described below may be applied to the above-described paging message control operations.

### Uu signaling message transfer conditions

For example, the last relay UE may initiate a procedure to transmit a Uu message to the remote UE when one or more of the following conditions are met. In the case of reception of the paging message associated with the remote UE connected to the last relay UE directly through a PC interface or through an indirect path (multi-hop sidelink relay) through one or more sidelink relays, reception of the SIB(s) requested by the remote UE, reception of unsolicited SIB, or one or more related configurations by the base station, the last relay UE may transmit the signaling message (or corresponding information) to the remote UE.

The last relay UE may initiate a procedure to transfer the received Uu message to the remote UE. The remote UE that received the Uu message, upon receiving the paging-related information, may perform a paging reception procedure. The remote UE that received system information-related information, upon receiving system information-related information, may perform a paging reception procedure. Additionally, it may perform a system information reception operation.

### Uu signaling message transfer through end-to-end signaling radio bearer

As another example, the base station may transmit the paging message and/or system information for the remote UE through an end-to-end Uu signaling radio bearer to the remote UE. For example, the base station may transmit a downlink RRC message (e.g., RRC reconfiguration message) including the paging message and/or system information to the remote UE through SRB0 and/or SRB1 between the base station and the remote UE.

The base station may configure an SRB0/SRB1 relaying a Uu relay RLC channel to the last relay UE. The base station may transmit the Uu message in response to the system information request received from the remote UE. Alternatively, the base station may transmit the Uu message for paging of the remote UE.

The Uu message may be transmitted using the SRB0/SRB1 relaying the Uu relay RLC channel on the Uu interface. It may be transmitted using a designated PC5 relay RLC channel on the PC5 interface. The base station may configure, in the last relay UE, information for mapping between a "PC5 RLC channel on the PC5 interface between the last relay UE and the intermediate relay UE" and a "Uu RLC channel on a Uu interface between the last relay UE and the base station." The configuration information may be associated/mapped to a radio bearer identifier (e.g., SRB0/SRB1) of the remote UE indirectly connected to the last relay UE.

For an SRAP data PDU to be transmitted, if a local UE identifier for the remote UE in sidelink remote UE/UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the last relay UE may recognize that the remote UE is connected to the intermediate relay UE according to the configuration indicated by the base station. For the Uu message, the last relay UE may determine the PC5 interface to an egress relay UE (intermediate relay UE) of the remote UE as an egress link.

If the SRAP data PDU is intended for SRBO, an egress PC5 RLC channel is determined in the determined egress link corresponding to the logical channel identifier for SL-RLCO.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB ID (e.g., SRB1) of the SRAP data PDU determined by the bearer ID field,

the egress PC5 relay RLC channel in the determined egress link corresponding to the logical channel identifier for the SL-RLC1 of the remote UE and the local UE identifier or the radio bearer identifier of the remote UE (e.g., the egress PC5 relay RLC channel in the determined egress link corresponding to the sidelink egress RLC channel configured for the radio bearer identifier (e.g., SRB-ID for SRB1) of the remote UE) is determined.

For example, if the SRAP data PDU is intended for SRB1 but the sidelink egress RLC channel is absent in the sidelink relay SRAP configuration, the egress PC5 relay RLC channel in the determined egress link corresponding to the logical channel identifier for SL-RLC1 is determined.

Otherwise, the egress PC5 relay RLC channel is determined in the determined egress link corresponding to the sidelink egress RLC channel configured for the remote UE radio bearer identifier and the local UE identifier.

The base station may configure, in the intermediate relay UE, information for mapping between a "PC5 RLC channel on the PC5 interface between the last relay UE and the intermediate relay UE" and a "PC5 RLC channel on a PC5 interface between the intermediate relay UE and the first relay UE". The configuration information may be associated/mapped to a radio bearer identifier (e.g., SRB0/SRB1/DRB) of the remote UE indirectly connected to the intermediate relay UE.

For an SRAP data PDU to be transmitted, if a local UE identifier for the remote UE in sidelink remote UE/UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the intermediate relay UE may recognize that the remote UE is connected to the first relay UE according to the configuration indicated by the base station. For the Uu message, the intermediate relay UE may determine the PC5 interface to an egress relay UE (first relay UE) of the remote UE as an egress link.

If the SRAP data PDU is for SRBO, an egress PC5 RLC channel is determined in the determined egress link corresponding to the logical channel identifier for SL-RLC0.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB ID (e.g., SRB1) of the SRAP data PDU determined by the bearer ID field,

the egress PC5 relay RLC channel in the determined egress link corresponding to the logical channel identifier for the SL-RLC1 of the remote UE and the local UE identifier or the radio bearer identifier of the remote UE (e.g., the egress PC5 relay RLC channel in the determined egress link corresponding to the sidelink egress RLC channel configured for the radio bearer identifier (e.g., SRB-ID for SRB1) of the remote UE) is determined.

For example, if the SRAP data PDU for SRB1 is intended for SRB1 but the sidelink egress RLC channel is absent in the sidelink relay SRAP configuration, the egress PC5 relay RLC channel in the determined egress link corresponding to the logical channel identifier for SL-RLC1 is determined.

Otherwise, the egress PC5 relay RLC channel is determined in the determined egress link corresponding to the sidelink egress RLC channel configured for the remote UE radio bearer identifier and the local UI identifier.

The base station may configure, in the first relay UE, information for mapping between a "PC5 RLC channel on the PC5 interface between the intermediate relay UE and the first relay UE" and a "PC5 RLC channel on a PC5 interface between the first relay UE and the remote UE". The configuration information may be associated/mapped to a radio bearer identifier of the remote UE connected to the first relay UE.

For an SRAP data PDU to be transmitted, if a local UE identifier for the remote UE in sidelink remote UE/UE list information to be additionally modified matches a UE identifier (UE ID) field in the SRAP data PDU, an SRAP entity may determine a transmission link (egress link) on the PC5 interface directly/indirectly connecting the corresponding remote UE configured with the local UE identifier. For example, the first relay UE may recognize that the remote UE is connected to the first relay UE according to the configuration indicated by the base station. For the Uu message, the first relay UE may determine the PC5 interface to the remote UE as an egress link.

If the SRAP data PDU is for SRBO, an egress PC5 RLC channel is determined in the determined egress link corresponding to the logical channel identifier for SL-RLC0.

Otherwise, if the local UE identifier included in the sidelink relay SRAP configuration in the sidelink remote UE list to be additionally modified matches the UE identifier (UE ID) field in the SRAP data PDU and/or the remote UE radio bearer identifier matches the SRB ID (e.g., SRB1) of the SRAP data PDU determined by the bearer ID field,

the egress PC5 relay RLC channel in the determined egress link corresponding to the logical channel identifier for the SL-RLC1 of the remote UE and the local UE identifier or the radio bearer identifier of the remote UE (e.g., the egress PC5 relay RLC channel in the determined egress link corresponding to the sidelink egress RLC channel configured for the radio bearer identifier (e.g., SRB-ID for SRB1) of the remote UE) is determined.

For example, if the SRAP data PDU is for SRB1 but the sidelink egress RLC channel is absent in the sidelink relay SRAP configuration, the egress PC5 relay RLC channel in the determined egress link corresponding to the logical channel identifier for SL-RLC1 is determined.

Otherwise, the egress PC5 relay RLC channel is determined in the determined egress link corresponding to the sidelink egress RLC channel configured for the remote UE radio bearer identifier and the local UE identifier.

### Uu signaling message transfer-related information indication

As another example, the base station may configure/indicate information necessary for the last relay UE to transfer a Uu message to the remote UE. The information may include one or more of path/relay UE-set information for data transfer to the remote UE by the last relay UE (based on L2 destination ID), remote UE L2 destination ID information, Uu message transfer/delivery/trigger indication information, and RRC connection state transition indication information of the relay/remote UE.

For transmission of the end-to-end Uu downlink RRC message (e.g., paging message and/or downlink RRC message including system information), all UEs on the path between the remote UE and the base station (e.g., if connected as remote UE-first relay UE-intermediate relay UE-last relay UE-base station, the remote UE, the first relay UE, the intermediate relay UE, and the last relay UE) may transition to the RRC connected state. For example, the base station may allow the last relay UE to transition to the connected state through the RRC connection setup/configuration/resume procedure (e.g., transmission of RRC setup/resume request message, reception of RRC setup/resume message) by transmitting the paging message to the last relay UE. The last relay UE may perform a sidelink discovery procedure and/or PC5 connection establishment procedure to the downlink/lower relay UE (e.g., intermediate relay UE, first relay UE) (on the previous connection path). The downlink/lower relay UE may transition to the connected state through the RRC connection setup/configuration/resume procedure with the base station. In the sidelink discovery procedure and/or PC5 connection establishment procedure, one or more of path/relay UE-set information for data transmission to the remote UE by the last relay UE (based on L2 destination ID), remote UE L2 destination ID information, Uu message transmission/delivery/trigger indication information, and RRC connection state transition indication information of the relay/remote UE may be transmitted/received between the last relay UE and the downlink/lower relay UE.

If the downlink/lower relay UE is the first relay UE, the first relay UE may perform a sidelink discovery procedure and/or PC5 connection configuration procedure to the remote UE. The remote UE may transition to the connected state through the RRC connection setup/configuration/resume procedure with the base station. In the sidelink discovery procedure and/or PC5 connection establishment procedure, information for data transmission to the remote UE by the first relay UE may include one or more of path/relay UE-set information (based on L2 destination ID), remote UE L2 destination ID information, Uu message transmission/delivery/trigger indication information, and RRC connection state transition indication information of the relay/remote UE.

The base station may transmit the paging message and/or system information through an end-to-end Uu signaling radio bearer to the remote UE.

### Uu signaling message transfer through PC5 RRC message

As another example, the last relay UE may perform a sidelink RRC procedure on each PC5 link on the path to the remote UE, thereby transmitting the Uu message (or paging message or system information) to the remote UE.

The last relay UE may transmit the sidelink RRC message including the indication information to the intermediate relay UE.

The last relay UE may perform a sidelink discovery procedure and/or PC5 connection establishment procedure to the downlink/lower relay UE (e.g., intermediate relay UE, first relay UE) (on the previous connection path). The last relay UE may include the Uu message (or paging message or system information), as one RRC container/information element, in the sidelink RRC message and transmit it. In the sidelink discovery procedure and/or PC5 connection establishment procedure, one or more of path/relay UE-set information for data transmission to the remote UE by the last relay UE (based on L2 destination ID), remote UE L2 destination ID information, Uu message transmission/delivery/trigger indication information, and control message transfer/delivery/trigger indication information to the remote UE may be defined and transmitted/received between the last relay UE and the downlink/lower relay UE. Alternatively, the sidelink RRC message may include information necessary to transmit the Uu message (or paging message or system information) to the remote UE. For example, one or more of the remote UE identification information (L2 destination ID) to transmit the message, path/relay UE-set information between the remote UE and the last relay UE, Uu message transmission/delivery/trigger indication information, and control message transfer/delivery/trigger indication information to the remote UE may be included.

As the sidelink RRC message, a sidelink notification message (e.g., NotificationMessageSidelink) or sidelink RRC reconfiguration message may be used. Alternatively, a new sidelink RRC message may be defined and used. Until the final destination L2 destination ID (e.g., remote UE) of the indication information is reached on the downlink, the sidelink relay may transmit the message through the downlink. For example, it may check whether it has reached the first relay UE receiving the remote UE or whether it has reached the remote UE. In the sidelink discovery and/or sidelink relay configuration process by the base station, whether it is a downlink may be explicitly or implicitly configured/indicated/identified by the number of hops or the like.

For example, the first relay UE that received the message may transmit the sidelink RRC message including the information to the remote UE. For example, the first relay UE that received the sidelink RRC message may use the information to transmit the indication information to the remote UE if the sidelink RRC message included the information necessary to transmit the information to the remote UE. As another example, (if the UE is not an L2 U2N relay UE according to the prior art, and/or if the UE is not the first relay UE for the remote UE), the intermediate relay UE that received the sidelink RRC message may transmit it to the first relay UE (or next hop to the last relay UE).

As another example, the last relay UE may transmit, to the remote UE (end-to-end between the remote UE and the last relay UE), a Uu message (or paging message or system information) through the sidelink RRC message, through the end-to-end PC5-RRC connection between the remote UE and the last relay UE.

The last relay UE may transmit the end-to-end sidelink RRC message including the Uu message (or, the paging message or system information) to a downlink/lower relay UE (e.g., the intermediate relay UE, the first relay UE) (on the previous connection path). For example, a sidelink discovery procedure and/or a PC5 connection setup procedure may be performed. The last relay UE may include the end-to-end sidelink RRC message including the Uu message (or, the paging message or system information) in the sidelink RRC message and transmit it to a downlink/lower relay UE (e.g., the intermediate relay UE, the first relay UE). The end-to-end sidelink RRC message may be included in the sidelink RRC message between the last relay UE and the downlink/lower relay UE and may be transmitted. The sidelink RRC message between the last relay UE and the downlink/lower relay UE may include information for indicating whether the end-to-end sidelink RRC message is included and/or information necessary for transmitting the indication information to the remote UE. A PDCP/SDAP configuration for transmitting the end-to-end sidelink RRC message may be configured to the remote UE and the last relay UE by the base station or by pre-configuration. The sidelink RRC message between the last relay UE and the downlink/lower relay UE may include UE identification information (L2 destination ID) of the remote UE to which the Uu message is to be transmitted. Alternatively, path/relay UE-set information between the remote UE and the last relay UE may be included. Alternatively, information for indicating whether the message is to be transmitted to the remote UE may be included. Alternatively, the L2 destination ID that serves as the final destination of the indication information on the downlink may be included.

If the downlink/lower relay UE is the first relay UE, the first relay UE may transmit, to the remote UE, an end-to-end sidelink RRC message including the Uu message (or paging message or system information). For example, a sidelink discovery procedure and/or a PC5 connection setup procedure may be performed. The first relay UE may include the end-to-end sidelink RRC message including the Uu message (or paging message or system information) in the sidelink RRC message and transmit it to the remote UE. The end-to-end sidelink RRC message may be included in the sidelink RRC message between the first relay UE and the remote UE and may be transmitted. The sidelink RRC message between the first relay UE and the remote UE may include information for indicating whether the end-to-end sidelink RRC message is included and/or information necessary for transmitting the indication information to the remote UE. A PDCP/SDAP configuration for transmitting the end-to-end sidelink RRC message may be configured to the remote UE and the last relay UE by the base station or by pre-configuration. The sidelink RRC message between the first relay UE and the remote UE may include UE identification information (L2 destination ID) of the remote UE to which the Uu message is to be transmitted. Alternatively, path/relay UE-set information between the remote UE and the last relay UE may be included. Alternatively, information for indicating whether the message is to be transmitted to the remote UE may be included. Alternatively, the L2 destination ID that serves as the final destination of the indication information on the downlink may be included.

As another example, the end-to-end sidelink RRC message may be transmitted between the remote UE and the last relay UE through U2U sidelink relaying of the first relay UE.

If the last relay UE receives information for indicating paging occasion monitoring for the remote UE through the above-described embodiments, the last relay UE may operate as follows.

If the message includes paging information for the remote UE, and if the UE is in the RRC connected state on the active BWP having a common search space including a paging search space, or in the RRC idle/inactive state, if paging information is set up for the remote UE, it may monitor the paging message in a paging occasion of the remote UE calculated by the identifier of the remote UE and the paging cycle.

When the last relay UE is in the RRC connected state, the last relay UE may notify the base station of the remote UE information through the sidelink UE information message for paging delivery purposes.

The remote UE that received the Uu message, upon receiving the paging-related information, may perform a paging reception procedure. The remote UE that received system information-related information, upon receiving system information-related information, may perform a paging reception procedure. It may perform a system information reception operation.

As another example, if one or more of an RLF (e.g., Uu RLF detection) of the last relay UE on the interface with the base station, a cell change in the last relay UE (e.g., reception of RRC reconfiguration message including handover configuration (e.g., reconfigurationWithSync) by the last relay UE in the RRC connected state, cell reselection by the last relay UE in the RRC idle/inactive state, and RRC connection failure of the last relay UE occur, the last relay UE may notify the connected downlink/lower relay UE and/or directly/indirectly connected remote UE(s) of the same. For example, the indication information type may be set as one of a relay UE Uu-RLF, relay UE handover, relay UE cell reselection, and relay UE RRC failure, and the connected downlink/lower relay UE and/or directly/indirectly connected remote UE(s) may be notified of the same. The indication information may include identification information of the relay UE sending/generating/starting/transmitting/indicating the notification message. For example, the identifier of the relay UE may include one or more of the source L2 ID, target L2 ID, and C-RNTI. The indication information may include information for instructing to forward/transfer/relay the indication information to the remote UE. For example, it may include one or more of the identification information (e.g., one or more of source L2 ID, target L2 ID, and C-RNTI) of the final destination UE of the notification message and path/relay UE-set information to the final destination UE. The downlink/lower relay UE that received the same may check whether it is the final destination UE using the information. If the downlink/lower relay UE is not the final destination UE, it may forward/transfer/relay the same to the sidelink relay UE of the next hop.

If the UE is any sidelink relay UE (e.g., the first relay UE, intermediate/center relay UE), and/or remote UE in the RRC idle/inactive state connected to the base station through the last relay UE, and the UE maintains the PC5 RRC connection, and if the indication information is about handover of the last relay UE or cell reselection, the UE may consider that cell change/reselection has occurred, and may not instruct to release the PC5 unicast link through the higher layer.

The present embodiments may be used to transmit any control plane message (e.g., (end-to-end) Uu RRC message, (end-to-end) PC5-RRC message, or higher layer message) to the remote UE through one or more other sidelink relay UEs.

As described above, it is possible to effectively receive a paging message through a sidelink relay.

Configurations of the last relay UE and the intermediate relay UE performing the above-described operations are briefly described again below. The remote UE and the base station may also be configured for the above-described multi-hop relay operation.

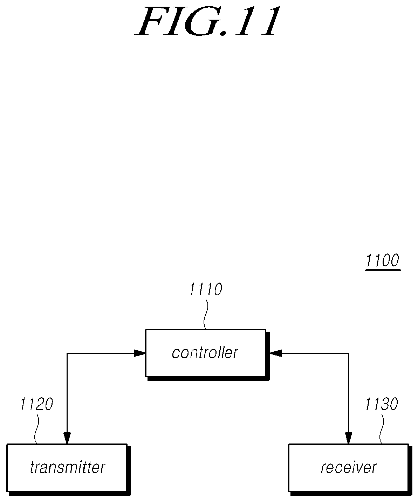

FIG. 11 is a block diagram illustrating an intermediate relay UE according to an embodiment.

Referring to FIG. 11, an intermediate relay UE 1100 performing paging control through a multi-hop relay operation in a sidelink network may include a receiver 1130 receiving a sidelink remote UE information message for receiving a paging message of a remote UE from a child relay UE and a transmitter 1120 transmitting the sidelink remote UE information message to a parent relay UE.

The receiver 1130 may receive a sidelink RRC message including a paging record for the remote UE from the parent relay UE. The transmitter 1120 may transmit the sidelink RRC message including the paging record to the child relay UE.

For example, the intermediate relay UE 1100 may be configured to perform a relay UE operation and a remote UE operation simultaneously. The controller 1110 may perform a relay UE function for relaying data between the remote UE and the parent UE. Further, the intermediate relay UE 1100 may include a remote UE function for operating as the remote UE.

The intermediate relay UE 1100 may operate as the remote UE to transfer or receive data to or from an upper relay UE. Further, the controller 1110 may control operations to transfer or receive data by operating as a relay UE to a lower relay UE or the remote UE.

The receiver 1130 may receive the sidelink remote UE information message from the child relay UE, which is a lower relay UE. The sidelink remote UE information message is the sidelink RRC message.

The sidelink remote UE information message may include information for receiving paging of the remote UE. For example, the sidelink remote UE information message may include at least one of identification information of the remote UE and UE-specific DRX cycle information. Accordingly, the last relay UE may receive the paging message of the remote UE and transfer it to the remote UE through a relay operation. Here, the identification information of the remote UE may be either 5G-S-TMSI or I-RNTI. For example, when the remote UE is in an RRC IDLE state, the identification information of the remote UE may include 5G-S-TMSI. As another example, when the remote UE is in an RRC INACTIVE state, the identification information of the remote UE may include I-RNTI.

The child relay UE, which is a UE positioned lower than the intermediate relay UE, may be another intermediate relay UE, the first relay UE, or the remote UE.

The sidelink remote UE information message includes information for receiving the paging message of the remote UE through a multi-hop relay operation and is transferred to the last relay UE through each relay UE.

Upon receiving the sidelink UE information message from the child relay UE, the transmitter 1120 may transfer it to the higher parent relay UE (e.g., parent relay UE). For example, the sidelink UE information message may be transferred as the sidelink RRC message through the PC5 interface between relay UEs.

The parent relay UE, which is a relay UE positioned higher (e.g., above) than the intermediate relay UE, may be another intermediate relay UE or the last relay UE.

For example, if the identification information of the remote UE included in the sidelink remote UE information message matches the UE identification information of the paging message received from the base station, the parent relay UE may include the paging record for the remote UE in the sidelink RRC message and transmit it to the intermediate relay UE. The parent relay UE performing such an operation is the last relay UE.

The parent relay UE (last relay UE) receives information related to the transfer of the paging message for the remote UE that is to receive the paging message. If the paging message is received from the base station, the parent relay UE identifies whether the identification information of the remote UE matches the UE identification information included in the paging message. If the identification information of the remote UE matches the UE identification information of the paging message, it is identified that the paging message is intended for the remote UE.

Therefore, the parent relay UE may include the paging record for the remote UE in the sidelink RRC message and transmit it to the intermediate relay UE.

The receiver 1130 receives the sidelink RRC message transferred by the parent relay UE. The sidelink RRC message may include the paging record for the remote UE.

The transmitter 1120 may transfer the received sidelink RRC message to the child relay UE. For this purpose, the sidelink RRC message may include L2 destination ID information or the like.

Meanwhile, the base station may broadcast whether the base station supports multi-hop relay operation or multi-hop relay operation through sidelink. In the case of sidelink multi-hop relay operation, the last relay UE receives the paging message and transfers it to the remote UE through the multi-hop relay. Further, even when falling outside the coverage of the base station cell, data communication functionality may be supported through the multi-hop relay.

To this end, the base station may transmit indication information indicating support for UEs performing multi-hop relay operation in the sidelink network through a downlink signal. By identifying this, a UE supporting sidelink multi-hop relay operation may recognize that the base station supports the function. For example, the indication information may be transmitted through system information. For example, the indication information may be included in SIB12.

Further, the controller 1110 controls the overall operation of the intermediate relay UE 1100based on data transmission/reception operation necessary for the sidelink-based multi-hop relay operation necessary for performing the above-described disclosure.

The transmitter 1120 and the receiver 1130 are used to transmit/receive signals, messages, or data necessary for performing the above-described disclosure, with the relay UE, the remote UE, or the like.

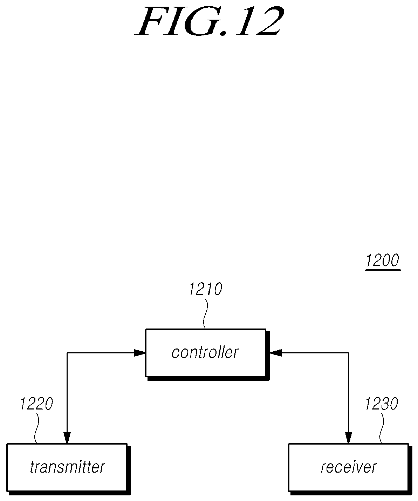

FIG. 12 is a block diagram illustrating a last relay UE according to an embodiment.

Referring to FIG. 12, a last relay UE 1200 performing paging control through a multi-hop relay operation in a sidelink network may include a receiver 1230 receiving, from an intermediate relay UE, a sidelink remote UE information message for receiving a paging message of a remote UE and receiving a paging message from a base station, a controller 1210 identifying whether identification information of the remote UE included in the sidelink remote UE information message matches UE identification information of the paging message, and a transmitter 1220, when the identification information of the remote UE matches the UE identification information of the paging message, including the paging record for the remote UE in the sidelink RRC message and transmitting it to the intermediate relay UE.

For example, the receiver 1230 receives the sidelink remote UE information message, configured to allow the remote UE to receive the paging message through a sidelink multi-hop relay operation, through the intermediate relay UE. The intermediate relay UE, as described above, means a relay UE configured between the last relay UE and the remote UE. The intermediate relay UE may be configured to perform both relay UE operation and remote UE operation simultaneously. The intermediate relay UE may include a relay UE function for relaying data between the remote UE and the parent UE. Further, the intermediate relay UE may include the remote UE function for operating as the remote UE.

The last relay UE is the parent relay UE from the perspective of the intermediate relay UE, and the intermediate relay UE is the child relay UE from the perspective of the last relay UE.

The sidelink remote UE information message is the sidelink RRC message.

The sidelink remote UE information message may include information for receiving paging of the remote UE. For example, the sidelink remote UE information message may include at least one of identification information of the remote UE and UE-specific DRX cycle information. Here, the identification information of the remote UE may be either 5G-S-TMSI or I-RNTI. For example, when the remote UE is in an RRC IDLE state, the identification information of the remote UE may include 5G-S-TMSI. As another example, when the remote UE is in an RRC INACTIVE state, the identification information of the remote UE may include I-RNTI.

If the sidelink remote UE information message is received, the controller 1210 may perform a paging monitoring operation for the remote UE using it.

For example, the receiver 1230 monitors and receives the paging message transmitted by the base station. When functioning as the last relay UE for a plurality of remote UEs, the receiver 1230 may receive paging messages for the plurality of remote UEs, which have received sidelink remote UE information messages, from the base station.

For example, the controller 1210 may monitor the paging message transmitted by the base station for the remote UE using DRX cycle information, identification information, and paging occasion information of the remote UE.

The controller 1210 may identify whether the monitored and received paging message is intended for the corresponding remote UE. To this end, the controller 1210 may use the sidelink remote UE information message received by the child relay UE (e.g., the intermediate relay UE).

As one example, the controller 1210 may identify whether the UE identification information of the received paging message matches the identification information of the remote UE included in the sidelink remote UE information message. As described above, the controller 1210 is to receive the paging message of the remote UE. When UE identification information and remote UE identification information match, it may be identified that the paging message is for the remote UE.

If the UE identification information of the paging message and the remote UE identification information do not match, the last relay UE determines that the paging message is not for the remote UE.

For example, if the identification information of the remote UE matches the UE identification information of the paging message, the paging message should be transferred to the remote UE. To this end, the transmitter 1220 includes the paging record for the remote UE in the sidelink RRC message and transmits it to the remote UE.

The transmitter 1220 may include the paging record, as a container, in the sidelink RRC message and transmit it to the intermediate relay UE, which is the child relay UE. If the intermediate relay UE receives the sidelink RRC message including the paging record for the remote UE from the parent relay UE (e.g., the last relay UE), it may transfer it to the child relay UE. When the intermediate relay UE is the first relay UE, the sidelink RRC message may be transferred to the remote UE.

For such a transfer procedure, the sidelink RRC message may include, e.g., L2 destination ID information.

Meanwhile, the base station may broadcast whether the base station supports multi-hop relay operation or multi-hop relay operation via sidelink. In the case of sidelink multi-hop relay operation, the last relay UE receives the paging message and transfers it to the remote UE through the multi-hop relay. Further, even when falling outside the coverage of the base station cell, data communication functionality may be supported through the multi-hop relay.

To this end, the base station may transmit indication information indicating support for UEs performing multi-hop relay operation in the sidelink network through a downlink signal. By identifying this, a UE supporting sidelink multi-hop relay operation may recognize that the base station supports the function. For example, the indication information may be transmitted through system information. For example, the indication information may be included in SIB12.

Further, the controller 1210 controls the overall operation of the last relay UE 1200 based on data transmission/reception operation necessary for the sidelink-based multi-hop relay operation necessary for performing the above-described disclosure.

The transmitter 1220 and the receiver 1230 are used to transmit/receive signals, messages, or data necessary for performing the above-described disclosure, with the relay UE, the base station, the remote UE, or the like.

Further, the base station may include a controller, a transmitter, and a receiver.

The controller controls the overall operation of the base station to support data transfer through a sidelink multi-hop relay operation necessary to perform the present embodiments described above.

The transmitter and the receiver are used to transmit/receive signals, messages, or data necessary for performing the above-described disclosure, with the relay UE, the remote UE, or the like.

Further, the remote UE may also include a receiver, a controller, and a transmitter.

The receiver receives downlink control information and data or messages from the relay UE or the base station through a corresponding channel.

Further, the controller controls the overall operation of the remote UE according to the data transmission/reception method through a sidelink multi-hop relay operation.

The transmitter transmits uplink control information, data, and messages to the relay UE and the base station through a corresponding channel.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for paging control of an intermediate relay user equipment (UE) providing a multi-hop relay operation in a sidelink network, the method comprising:
receiving, from a child relay UE, a sidelink remote UE information message for receiving a paging message of a remote UE;
transmitting the sidelink remote UE information message to a parent relay UE;
receiving, from the parent relay UE, a sidelink radio resource control (RRC) message including a paging record for the remote UE; and
transmitting, to the child relay UE, the sidelink RRC message including the paging record.

2. The method of claim 1, wherein the intermediate relay UE is configured to simultaneously perform a relay UE operation and a remote UE operation.

3. The method of claim 1, wherein the sidelink remote UE information message includes at least one of i) identification information of the remote UE and ii) UE-specific Discontinuous Reception (DRX) cycle information.

4. The method of claim 3, wherein the identification information of the remote UE is any one of a 5G-S-TMSI (5G Short Term Mobile Subscriber Identity) and an I-RNTI (Initial Radio Network Temporary Identifier).

5. The method of claim 1, wherein the parent relay UE includes the paging record for the remote UE in the sidelink RRC message and transmits the sidelink RRC message to the intermediate relay UE if the identification information of the remote UE included in the sidelink remote UE information message matches UE identification information of a paging message received from a base station.

6. The method of claim 5, wherein the base station transmits indication information indicating that a UE performing the multi-hop relay operation in the sidelink network is supported, through a downlink signal.

7. A method for paging control of a last relay user equipment (UE) providing a multi-hop relay operation in a sidelink network, the method comprising:
receiving, from an intermediate relay UE, a sidelink remote UE information message for receiving a paging message of a remote UE;
receiving a paging message from a base station;
identifying whether identification information of the remote UE included in the sidelink remote UE information message matches UE identification information of the paging message; and
when the identification information of the remote UE matches the UE identification information of the paging message, including the paging record for the remote UE in the sidelink radio resource control (RRC) message and transmitting the sidelink RRC message to the intermediate relay UE.

8. The method of claim 7, wherein the sidelink remote UE information message includes at least one of identification information of the remote UE and UE-specific discontinuous reception (DRX) cycle information.

9. The method of claim 8, wherein the identification information of the remote UE is any one of a 5G Short Term Mobile Subscriber Identity (5G-S-TMSI) and an Initial Radio Network Temporary Identifier (I-RNTI).

10. The method of claim 7, wherein the base station transmits indication information indicating that a UE performing the multi-hop relay operation in the sidelink network is supported, through a downlink signal.

11. An intermediate relay user equipment (UE) performing paging control through a multi-hop relay operation in a sidelink network, comprising:
a receiver receiving, from a child relay UE, a sidelink remote UE information message for receiving a paging message of a remote UE; and
a transmitter transmitting the sidelink remote UE information message to a parent relay UE, wherein the receiver receives, from the parent relay UE, a sidelink radio resource control (RRC) message including a paging record for the remote UE, and the transmitter transmits, to the child relay UE, the sidelink RRC message including the paging record.

12. The intermediate relay UE of claim 11, wherein the sidelink remote UE information message includes at least one of identification information of the remote UE and UE-specific discontinuous reception (DRX) cycle information.

13. The intermediate relay UE of claim 12, wherein the identification information of the remote UE is any one of a 5G Short Term Mobile Subscriber Identity (5G-S-TMSI) and an Initial Radio Network Temporary Identifier (I-RNTI).

14. The intermediate relay UE of claim 11, wherein the parent relay UE includes the paging record for the remote UE in the sidelink RRC message and transmits the sidelink RRC message to the intermediate relay UE if the identification information of the remote UE included in the sidelink remote UE information message matches UE identification information of a paging message received from a base station.

15. The intermediate relay UE of claim 14, wherein the base station transmits indication information indicating that a UE performing the multi-hop relay operation in the sidelink network is supported, through a downlink signal.
